# EUROPÄISCHE PATENTSCHRIFT

(11) **EP 1 204 464 B1**
(45) Veröffentlichungstag und Bekanntmachung des Hinweises auf die Patenterteilung: **09.04.2003**
(21) Anmeldenummer: 00965879.0
(22) Anmeldetag: 16.08.2000
(51) Int. Cl.: B01D 65/06, C25D 13/24, B01D 61/14

(54) **REINIGUNGSMITTEL UND VERFAHREN ZUR REINIGUNG VON ULTRAFILTRATIONSMEMBRANEN IN ELEKTROTAUCHLACKIERUNGSANLAGEN**
CLEANING AGENT AND METHOD FOR CLEANING ULTRAFILTRATION MEMBRANES IN ELECTROPHORETIC DIP COATING INSTALLATIONS
DETERGENT ET PROCEDE DE NETTOYAGE DE MEMBRANES D'ULTRAFILTRATION DANS DES INSTALLATIONS DE PEINTURE ELECTROPHORETIQUE PAR IMMERSION

(30) Priorität: 17.08.1999 DE 19938886
(43) Veröffentlichungstag der Anmeldung: 15.05.2002
(73) Patentinhaber: E.I. DU PONT DE NEMOURS AND COMPANY, Wilmington Delaware 19898 (US)
(72) Erfinder: BÜNGER, Hans-Peter, 53489 Sinzig (DE); LEHMANN, Horst, 42329 Wuppertal (DE)
(74) Vertreter: Gille Hrabal Struck Neidlein Prop Roos
(86) Internationale Anmeldenummer: EP0007994
(87) Internationale Veröffentlichungsnummer: WO01012306

(56) Entgegenhaltungen:
- EP-A- 0 255 669
- DE-A- 2 842 626
- PATENT ABSTRACTS OF JAPAN vol. 006, no. 266 (C-142), 25. Dezember 1982 (1982-12-25) & JP 57 158398 A (NITTO DENKI KOGYO KK), 30. September 1982 (1982-09-30)
- PATENT ABSTRACTS OF JAPAN vol. 004, no. 119 (C-022), 23. August 1980 (1980-08-23) & JP 55 073896 A (MAZDA MOTOR CORP), 3. Juni 1980 (1980-06-03)
- PATENT ABSTRACTS OF JAPAN vol. 010, no. 067 (C-333), 15. März 1986 (1986-03-15) & JP 60 204898 A (NITTO DENKI KOGYO KK), 16. Oktober 1985 (1985-10-16)

## Beschreibung

Die Erfindung betrifft Reinigungsmittel für Ultrafiltrationsmembranen in Ultrafiltrationsanlagen von Elektrotauchlackieranlagen. Die Erfindung betrifft auch ein Verfahren zur Reinigung der Ultrafiltrationsmembranen unter Verwendung der Reinigungsmittel.

Die Elektrotauchlackierung (ETL) hat sowohl als anodische Tauchlackierung (ATL) als auch insbesondere als kathodische Tauchlackierung (KTL) weite Verbreitung in der industriellen Lackierung gefunden. Insbesondere wird sie beispielsweise als KTL in der Automobilindustrie angewendet zur Applikation der korrosionsschützenden Grundierungsüberzugsschicht auf Kraftfahrzeugkarossen. Die ETL-Bäder sind gekoppelt mit einer eine oder mehrere Ultrafiltrationsmodule aufweisenden Ultrafiltrationsanlage, in der der Elektrotauchlack (ETL) einer Membrandruckfiltration bei beispielsweise 1 bis 5 bar (Eingangsdruck am Ultrafiltrationsmodul) unterzogen wird. Bei der Ultrafiltration erfolgt eine Auftrennung des ETL-Überzugsmittels an einer semipermeablen Membran in ein ins ETL-Bad zurückgeführtes Konzentrat und ein ETL-Ultrafiltrat (Permeat). Das ETL-Ultrafiltrat hat einen nur niedrigen Festkörpergehalt von beispielsweise über 0 bis unter 0,5 Gew.-%. Es besteht hauptsächlich aus Wasser, in untergeordnetem Maße enthält es membrangängige Bestandteile des Elektrotauchlacks, wie Neutralisationsmittel, gelöste Salze, organische Lösemittel und niedermolekulare Bindemittelbestandteile, Die ETL-Ultrafiltration hat zwei Funktionen. Zum einen dient das gewonnene ETL-Ultrafiltrat zur Abspülung nicht festhaftenden ET-Lacks von den ETL-beschichteten Substraten nach deren Austauchen aus dem ETL-Beschichtungsbad. Nach dem Abspülen werden die ETL-beschichteten Substrate dem Einbrennofen der ETL-Anlage zugeführt. Der mit dem ETL-Ultrafiltrat abgespülte ETL wird dem ETL-Bad wieder zugeführt. Die zweite Funktion der ETL-Ultrafiltration besteht in einer Konstanthaltung der ETL-Badzusammensetzung innerhalb einer gewissen Toleranz, indem eine nicht als Spülmittel verwendete Teilmenge des ETL-Ultrafiltrats verworfen wird. Auf diese Weise kann eine Aufkonzentrierung störender membrangängiger Bestandteile im ETL-Bad vermieden werden.

Die Trennmembranen innerhalb der Ultrafiltrationsmodule von ETL-Ultrafiltrationsanlagen bedürfen einer intervallmäßigen Reinigung und in der Regel auch einer Konditionierung (Imprägnierung) vor Aufnahme ihres bestimmungsgemäßen Gebrauchs. Beispielsweise beschreibt die US-A 4 136 025 ein Verfahren zur Reinigung von Membranen innerhalb von KTL-Ultrafiltrationsanlagen unter Verwendung einer wäßrigen Lösung einer Säure, die ein wasserlösliches organisches Lösemittel enthält. Das in der US-A 4 136 025 angegebene Beispiel nennt als Zusammensetzung der wäßrigen Reinigerlösung:
7,5 Gew.-% Butylglykol,
5,7 Gew.-% 88%ige wäßrige Milchsäure und
86,8 Gew.-% deionisiertes Wasser.

Die Reinigungswirkung solcher im wesentlichen aus Neutralisationsmittel, Wasser und organischem Lösemittel bestehenden Reinigungsmittel des Standes der Technik ist verbesserungsbedürftig. Beispielsweise hat sich gezeigt, daß die Leistung der ETL-Ultrafiltrationsanlagen nach der Membranreinigung mit derartig zusammengesetzten Reinigungsmitteln von Reinigungsintervall zu Reinigungsintervall im Sinne einer Exponentialfunktion immer schneller nachläßt, d.h. von Reinigung zu Reinigung verkürzen sich die Reinigungsintervalle, bis eine Reinigung sich nicht mehr lohnt und die Membran bzw. die die Membran enthaltenden Ultrafiltrationsmodule ausgetauscht werden müssen. Außerdem erreichen die ETL-Ultrafiltrationsanlagen von Reinigungsintervall zu Reinigungsintervall eine immer geringere Leistung verglichen mit der Leistung nach der jeweils vorhergegangenen Reinigung. Diese Nachteile der Verwendung von Reinigungsmitteln des Standes der Technik sind besonders ausgeprägt im Zusammenhang mit der Reinigung von modernen, kompakt gebauten ETL-Ultrafiltrationsmodulen.

Aufgabe der Erfindung ist die Bereitstellung von im Vergleich zum Stand der Technik wirksameren Reinigungsmitteln und Verfahren zur Reinigung von ETL-Ultrafiltrationsmembranen.

Die Aufgabe kann gelöst werden, wenn wäßrige Reinigungsmittel, die mit Neutralisationsmittel überneutralisierte ETL-Bindemittel enthalten, zur Reinigung von ETL-Ultrafiltrationsmembranen, beispielsweise in ETL-Ultrafiltrationsmodulen von ETL-Ultrafiltrationsanlagen enthaltenen Ultrafiltrationsmembranen verwendet werden.

Gegenstand der Erfindung sind zur Reinigung von ETL-Ultrafiltrationsmembranen verwendbare wäßrige Reinigungsmittel, die mit Neutralisationsmittel überneutralisierte ETL-Bindemittel enthalten. Dabei kann es sich entweder um zur Reinigung von ATL-Ultrafiltrationsmembranen verwendbare wäßrige Reinigungsmittel handeln, die mit Base überneutralisierte ATL-Bindemittel enthalten, oder es handelt sich um zur Reinigung von KTL-Ultrafiltrationsmembranen verwendbare wäßrige Reinigungsmittel, die mit Säure überneutralisierte KTL-Bindemittel enthalten.

Es ist erfindungswesentlich, daß die erfindungsgemäßen Reinigungsmittel neben Wasser ETL-Bindemittel, beispielsweise entsprechend einem Festkörpergehalt von 5 bis 35 Gew.-% enthalten. Bevorzugt beträgt der Gehalt an ETL-Bindemitteln in den erfindungsgemäßen Reinigungsmitteln 10 bis 30, besonders bevorzugt 15 bis 28 Gew.-%.

Bei den in den erfindungsgemäßen Reinigungsmitteln für die Reinigung von ATL-Ultrafiltrationsmembranen enthaltenen ATL-Bindemitteln handelt es sich um übliche ATL-Bindemittel, die anionische oder in anionische Gruppen überführbare Gruppen, z.B. COOH-, SO₃H- und/oder PO₃H₂-Gruppen tragen. Bevorzugt sind COOH-Gruppen. Die Säurezahlen solcher Harze liegen z.B. bei 35 bis 300 mg KOH/g. Das Gewichtsmittel der Molmasse (Mw) der Harze liegt bevorzugt bei 300 bis 10000. Beispiele für ATL-Bindemittel sind Polyester, Epoxidharzester, (Meth)acrylcopolymerharze, Maleinatöle oder Polybutadienöle. Die ATL-Bindemittel können selbstvernetzend sein oder mit bekannten Vernetzern im Gemisch eingesetzt werden. Beispiele für solche Vemetzer sind Aminoplastharze, beispielsweise auf Triazinbasis, Vernetzer, die umesterungsfähige Gruppen enthalten oder blockierte Polyisocyanate.

Bei den in den erfindungsgemäßen Reinigungsmitteln für die Reinigung von KTL-Ultrafiltrationsmembranen enthaltenen KTL-Bindemitteln handelt es sich um übliche KTL-Bindemittel, die kationische oder in kationische Gruppen überführbare basische Gruppen, z.B. Amino-, Ammonium-, z.B. quartäre Ammonium-, Phosphoniumund/oder Sulfonium-Gruppen tragen. Bevorzugt sind KTL-Bindemittel mit basischen Gruppen, besonders bevorzugt mit stickstoffhaltigen basischen Gruppen, wie Aminogruppen. Solche basischen Harze sind beispielsweise primäre, sekundäre und/oder tertiäre Aminogruppen enthaltende Harze. Ein Teil der oder alle tertiären Aminogruppen können quaternisiert vorliegen. Die Aminzahlen solcher Harze liegen z.B. bei 20 bis 250 mg KOH/g. Das Gewichtsmittel der Molmasse (Mw) der Harze liegt bevorzugt bei 300 bis 10000. Beispiele für KTL-Bindemittel sind Amino(meth)acrylatharze, Aminopolyurethanharze, aminogruppenhaltige Polybutadienharze, Aminoepoxidharze sowie Epoxidharz-Kohlendioxid-Amin-Umsetzungsprodukte. Die KTL-Bindemittel können selbstvernetzend sein oder mit bekannten Vernetzern im Gemisch eingesetzt werden. Beispiele für solche Vernetzer sind Aminoplastharze, Vernetzer mit endständigen Doppelbindungen, Polyepoxidverbindungen, Vernetzer mit cyclischen Carbonatgruppen, Vernetzer, die umesterungsfähige und/oder umamidierungsfähige Gruppen enthalten, und insbesondere blockierte Polyisocyanate.

Im Zusammenhang mit den erfindungsgemäßen Reinigungsmitteln bedeutet der Begriff "ETL-Bindemittel" ETL-Bindemittel als solche oder ETL-Bindemittel plus Vernetzer für die ETL-Bindemittel. Die erfindungsgemäßen Reinigungsmittel können also ETL-Bindemittel, beispielsweise selbstvernetzende ETL-Bindemittel, oder ETL-Bindemittel und Vernetzer enthalten.

Es ist bevorzugt, wenn die erfindungsgemäßen Reinigungsmittel die gleichen ETL-Bindemittel und gegebenenfalls Vernetzer enthalten, wie die jeweiligen ETL-Bäder, deren jeweilige Ultrafiltrationssysteme mit den erfindungsgemäßen Reinigungsmitteln gereinigt werden.

Neben Wasser und ETL-Bindemittel enthalten die erfindungsgemäßen wäßrigen Reinigungsmittel Neutralisationsmittel entsprechend einer Überneutralisation der ETL-Bindemittel, beispielsweise entsprechend einem Neutralisationsgrad der ETL-Bindemittel von über 100 bis 1000 %. Bevorzugte Beispiele für als Neutralisationsmittel für ATL-Bindemittel verwendete Basen sind ATL-übliche Basen, wie Amine oder Aminoalkohole. Bevorzugte Beispiele für als Neutralisationsmittel für KTL-Bindemittel verwendete Säuren sind KTL-übliche Säuren, wie organische Monocarbonsäuren, wie z.B. Milchsäure, Ameisensäure, Essigsäure, oder Sulfonsäuren, wie z.B. Amidosulfonsäure, N-Alkylamidosulfonsäure, Methansulfonsäure. Es ist bevorzugt, wenn die erfindungsgemäßen Reinigungsmittel die gleichen Neutralisationsmittel enthalten, wie die jeweiligen ETL-Bäder, deren jeweilige Ultrafiltrationssysteme mit den erfindungsgemäßen Reinigungsmitteln gereinigt werden.

Die erfindungsgemäßen wäßrigen Reinigungsmittel können organische Lösemittel beispielsweise bevorzugt in einer Größenordnung wie im ETL-Bad, beispielsweise von bis zu 10 Gew.-%, bevorzugt 0 bis 5 Gew.-% enthalten. Besonders bevorzugt enthalten sie 0 bis unter 1 Gew.-% organische Lösemittel. Beispiele für organische Lösemittel sind insbesondere wasserlösliche organische Lösemittel wie Glykolether, beispielsweise Butylglykol, Ethoxypropanol; Alkohole, wie Isopropanol, Isobutanol, n-Butanol. Falls die erfindungsgemäßen Reinigungsmittel organische Lösemittel enthalten, ist es bevorzugt, daß sie die gleichen Lösemittel enthalten, wie die jeweiligen ETL-Bäder, deren jeweilige Ultrafiltrationssysteme mit den erfindungsgemäßen Reinigungsmitteln gereinigt werden.

Die erfindungsgemäßen Reinigungsmittel können hergestellt werden, indem ETL-Bindemittel und gegebenenfalls Vernetzer, Neutralisationsmittel und Wasser sowie gegebenenfalls organische Lösemittel im gewünschten Mengenverhältnis miteinander vermischt werden. Anstelle von Wasser kann auch ETL-Ultrafiltrat verwendet werden. Beispielsweise können die erfindungsgemäßen Reinigungsmittel hergestellt werden, inden eine wäßrige unter- oder vollneutralisierte ETL-Bindemittel und gegebenenfalls Vernetzei enthaltende ETL-Dispersion mit Neutralisationsmittel in zur Überneutralisation der ETL-Bindemittel ausreichender Menge, Wasser (oder ETL-Ultrafiltrat) und gegebenenfalls organischen Lösemitteln im entsprechenden Mengenverhältnis vermischt wird.

Bei ETL-Dispersionen handelt es sich um wäßrige Dispersionen von ETL-Bindemitteln sowie gegebenenfalls Vernetzern für die ETL-Bindemittel. Die ETL-Bindemittel liegen in den ETL-Dispersionen in mit Neutralisationsmittel neutralisierter Form vor. Sie können unter- oder vollneutralisiert sein. Vollneutralisation ist hier nicht zu verwechseln mit einer 100-igen Neutralisation, sondern liegt stets unter 100 %. Vollneutralisation liegt dann vor, wenn die vorgeschriebene Neutralisationsmittelmenge zur Neutralisation der ETL-Bindemittel verwendet worden ist und entspricht sowohl im Falle von ATL- als auch von KTL-Bindemitteln Neutralisationsgraden von beispielsweise 40 % bis beispielsweise maximal 60 %, bezogen auf das ETL-Bindemittel als solches. Bei Überschreitung der Vollneutralisation spricht man von Überneutralisation. ETL-Dispersionen besitzen Festkörpergehalte beispielsweise von 30 bis 45 Gew.-% und einen Gehalt an organischen Lösemitteln von bevorzugt unter 5 Gew.-%, bezogen auf den Dispersionsfestkörper.

ETL-Dispersionen können hergestellt werden durch Synthese von ETL-Bindemitteln in Anwesenheit oder Abwesenheit organischer Lösemittel und Überführung in eine wäßrige Dispersion durch Verdünnen der zuvor mit Neutralisationsmittel neutralisierten ETL-Bindemittel mit Wasser. Das oder die ETL-Bindemittel können im Gemisch mit einem oder mehreren geeigneten Vernetzern vorliegen und gemeinsam mit diesen in die wäßrige Dispersion überführt werden. Organisches Lösemittel kann, sofern vorhanden, vor oder nach Überführung in die wäßrige Dispersion bis zum gewünschten Gehalt entfernt werden, beispielsweise durch Destillation im Vakuum. Die nachträgliche Entfernung von Lösemitteln kann beispielsweise vermieden werden, wenn die gegebenenfalls im Gemisch mit Vernetzern vorliegenden ETL-Bindemittel im lösemittelarmen oder -freien Zustand, z.B. als lösemittelfreie Schmelze bei Temperaturen von beispielsweise bis zu 140°C mit Neutralisationsmittel neutralisiert und anschließend mit Wasser in die ETL-Dispersion überführt werden. Ebenfalls ist es beispielsweise möglich, die Entfernung organischer Lösemittel zu vermeiden, wenn die ETL-Bindemittel als Lösung in einem radikalisch polymerisierbaren, olefinisch ungesättigten Monomeren vorgelegt werden oder die Bindemittelsynthese in einem radikalisch polymerisierbaren Monomeren (z.B. Styrol) als Lösemittel durchgeführt wird, danach durch Neutralisation mit Neutralisationsmittel und Verdünnen mit Wasser in eine wäßrige Dispersion überführt wird und anschließend das radikalisch polymerisierbare Monomere auspolymerisiert wird.

Die erfindungsgemäßen Reinigungsmittel können zur Reinigung von ETL-Ultrafiltrationsmembranen verwendet werden. Insofern betrifft die Erfindung auch ein Verfahren zur Reinigung von ETL-Ultrafiltrationsmembranen unter Verwendung der erfindungsgemäßen Reinigungsmittel.

Das erfindungsgemäße Verfahren eignet sich zur Reinigung von Membranen in ETL-Ultrafiltrationssystemen unabhängig von der Bauart der jeweiligen Ultrafiltrationsmodule. Beispiele für verschiedene Bauarten von ETL-Ultrafiltrationsmodulen sind Ultrafiltrationsplatten-, Ultrafiltrationsrohr-, Ultrafiltrationsrohrbündel- sowie die besonders kompakt aufgebauten Ultrafiltrationsspiralwickelmodule.

Das erfindungsgemäße Verfahren unterliegt keiner Beschränkung hinsichtlich der Art der Ultrafiltrationsmembranen, beispielsweise bezüglich Membranmaterial und Porengröße, sondern eignet sich zur Reinigung aller in ETL-Ultrafiltrationsanlagen üblicherweise eingesetzten Ultrafiltrationsmembranen. Beispiele für Membranmaterialien sind Polysulfone, Polyethersulfone, Polyvinylidenfluorid, Polyacrylnitril; die Porenweiten der mit dem erfindungsgemäßen Verfahren zu reinigenden Ultrafiltrationsmembranen liegen beispielsweise bei 5 bis 100 nm.

Das erfindungsgemäße Reinigungsverfahren unterliegt keiner Beschränkung hinsichtlich der Zusammensetzung der ETL-Bäder, die an den zu reinigenden ETL-Ultrafiltrationsmembranen ultrafiltriert werden.

Die Reinigung von ETL-Ultrafiltrationsmembranen erfolgt in der Regel immer dann, wenn die Ultrafiltrationsleistung, die sich in der Fluxrate (Ultrafiltratvolumen pro Zeiteinheit) ausdrückt, deutlich nachläßt und einen definierten Grenzwert bzw. einen definierten Bruchteil von der Ausgangsleistung unterschreitet.

Zur Reinigung wird der ETL-Ultrafiltrationsbetrieb unterbrochen entweder bei aufrechterhaltenem ETL-Beschichtungsprozeß oder unter Unterbrechung des ETL-Beschichtungsprozesses. Die Aufrechterhaltung des ETL-Beschichtungsprozesses ist beispielsweise dann möglich, wenn die ETL-Ultrafiltrationsanlage mehrere Ultrafiltrationsmodule aufweist und nur ein Ultrafiltrationsmodul oder einige der Ultrafiltrationsmodule nach dem erfindungsgemäßen Verfahren gereinigt werden, während die verbleibenden Ultrafiltrationsmodule bestimmungsgemäß weiterarbeiten.

Werden alle Ultrafiltrationsmodule gleichzeitig nach dem erfindungsgemäßen Verfahren gereinigt, kann der ETL-Beschichtungsprozeß gegebenenfalls unterbrochen werden, beispielsweise wenn kein ausreichender Vorrat an ETL-Ultrafiltrat zur Verfügung steht, um die Dauer der Reinigung zu überbrücken. Zur Reinigung wird in der ETL-Ultrafiltrationsanlage befindliches ETL-Badmaterial mit Wasser oder ETL-Ultrafiltrat herausgespült und dem ETL-Bad wieder zugeführt. Anschließend wird das erfindungsgemäße Reinigungsmittel im Kreislauf durch die ETL-Ultrafiltrationsanlage gespült.

Der Durchsatz des erfindungsgemäßen Reinigungsmittels ist hoch, beispielsweise kann der Durchsatz des im Kreislauf durch ein zu reinigendes Ultrafiltrationsmodul einer im industriellen Maßstab betriebenen ETL-Ultrafiltrationsanlage geführten erfindungsgemäßen Reinigungsmittels 2 bis 20 m³ pro Stunde betragen. Das Spülen mit dem erfindungsgemäßen Reinigungsmittel erfolgt beispielsweise im gleichen Druckbereich (Eingangsdruck am jeweiligen ETL-Ultrafiltrationsmodul) wie die Ultrafiltration des ETL-Badmaterials, bevorzugt im Bereich von mehr als 1 bis zu 2 bar. Im allgemeinen wird das erfindungsgemäße Reinigungsmittel dabei selber in ein Konzentrat und ein Ultrafiltrat aufgetrennt, wobei es bevorzugt ist, wenn beide Komponenten dem im Kreislauf geführten Reinigungsmittel wieder zugefügt werden.

Die erfindungsgemäßen Reinigungsmittel können unmittelbar nach ihrer Herstellung durch Vermischen ihrer Bestandteile oder nach einer zunächst gewährten Reifungszeit von beispielsweise bis zu 12 Stunden zur Reinigung von ETL-Ultrafiltrationsmembranen eingesetzt werden. Das erfindungsgemäße Reinigungsmittel kann mit einer Temperatur von beispielsweise 20 bis 60°C, bevorzugt von 40 bis 55°C zur Reinigung der ETL-Ultrafiltrationsmembranen eingesetzt werden. Die Dauer des Reinigungsvorgangs liegt beispielsweise bei 5 bis 24 Stunden. Die Reinigungsparameter Reinigungsmitteldurchsatz, Druck, Temperatur und Dauer können im jeweiligen Einzelfall vom Fachmann durch einfache Versuche erarbeitet bzw. optimiert werden.

Nach beendeter Reinigung kann das Reinigungsmittel verworfen oder, falls seine Reinigungswirkung noch ausreichend ist, auch aufbewahrt werden für einen Wiedereinsatz in späteren Reinigungszyklen.

In einer bevorzugten Ausführungsform wird das erfindungsgemäße Verfahren mit einem wäßrigen Reinigungsmittel durchgeführt, das das oder die gleichen ETL-Bindemittel und gegebenenfalls Vernetzer sowie das gleiche Neutralisationsmittel und, falls das wäßrige Reinigungsmittel organische Lösemittel enthält, die gleichen organischen Lösemittel enthält, wie die jeweiligen ETL-Bäder, deren jeweilige Ultrafiltrationssysteme mit dem erfindungsgemäßen Reinigungsmittel gereinigt werden. Das Reinigungsmittel braucht dann nach erfolgter Reinigung nicht verworfen zu werden, sondern kann dem betreffenden ETL-Bad, das die gleichen Bindemittel und gegebenenfalls Vernetzer, die gleichen Neutralisationsmittel und die - falls enthalten - gleichen organischen Lösemittel enthält, zugesetzt werden. Diese Vorgehensweise ist besonders bevorzugt, da sie keine Entsorgungsprobleme hinsichtlich der wäßrigen Reinigungsmittel nach deren erfindungsgemäßer Verwendung aufwirft.

Beim Zusatz des gebrauchten wäßrigen Reinigungsmittels zum ETL-Bad kommt es darin zu einer Erhöhung des Neutralisationsmittelhaushaltes über die vorstehend erläuterte Vollneutralisation der ETL-Bindemittel hinaus, da das Reinigungsmittel überneutralisiertes ETL-Bindemittel ins ETL-Bad einbringt. Praktisch hat dies jedoch oftmals kaum oder keine Bedeutung. Dies wird deutlich, wenn man sich die Dimensionen industrieller ETL-Beschichtungsanlagen vergegenwärtigt. Beispielsweise werden ETL-Ultrafiltrationssysteme mit 50 bis 3000 im Kreislauf geführten Litern des erfindungsgemäßen wäßrigen Reinigungsmittels gereinigt. Nach erfolgter Reinigung wird diese Menge gebrauchten wäßrigen Reinigungsmittels dem ETL-Bad von beispielsweise 30 bis 500 m³ Volumen zugesetzt, so daß die Erhöhung des Neutralisationsmittelhaushaltes im ETL-Bad letztlich minimal ist. Bei kleineren Bädern liegen die Mengen entsprechend niedriger. Falls die Erhöhung des Neutralisationsmittelhaushaltes im ETL-Bad nicht toleriert werden kann oder soll, kann so vorgegangen werden, daß die überschüssige Neutralisationsmittelmenge im ETL-Bad im Zuge der regelmäßig notwendigen Festkörperkompensation des ETL-Bades kompensiert wird. Während des ETL-Beschichtungsprozesses wird infolge ET-Lackabscheidung auf dem Substrat Festkörper aus dem ETL-Bad ausgetragen. ETL-Bäder bedürfen daher einer regelmäßigen Festkörperkompensation, die beispielsweise bewirkt werden kann durch Zusatz entsprechender Mengen wäßriger ETL-Dispersion und Pigmentpaste zum an Festkörper verarmten ETL-Bad. Die ETL-Dispersion kann vollneutralisiert sein oder sie ist unterneutralisiert und es wird der zur Vollneutralisation fehlende Anteil an Neutralisationsmittel separat zugesetzt. Die vorstehend angesprochene Kompensation des im ETL-Bad überschüssigen Neutralisationsmittels kann daher so erfolgen, daß bei der Festkörperkompensation des ETL-Bades eine entsprechende Menge an unterneutralisierter ETL-Dispersion und/oder eine entsprechend geringere Neutralisationsmittelmenge beim separaten Zusatz von Neutralisationsmittel verwendet wird.

Die erfindungsgemäßen Reinigungsmittel bzw. das erfindungsgemäße Reinigungsverfahren erlauben eine effektive Reinigung von ETL-Ultrafiltrationsmembranen. Die Reinigungsintervalle sind lang und die Leistung der ETL-Ultrafiltrationsmembranen nach erfolgter Reinigung ist hoch. Bei Anwendung des erfindungsgemäßen Reinigungsverfahrens ist eine lange Lebensdauer der Ultrafiltrationsmodule bzw. -membranen gegeben, da der eingangs beschriebene Leistungsabfall von Reinigung zu Reinigung nicht eintritt oder wesentlich flacher verläuft im Vergleich zu den Reinigungsverfahren des eingangs beschriebenen Standes der Technik.

Ein weiterer Vorteil des erfindungsgemäßen Verfahrens ist, daß nach der eigentlichen Reinigung keine Konditionierung (Imprägnierung) der ETL-Ultrafiltrationsmembran durchgeführt werden muß, vielmehr kann das ETL-Ultrafiltrationssystem direkt im Anschluß an die Reinigung wieder mit dem ETL-Badinhalt verbunden werden und seinen bestimmungsgemäßen Betrieb wiederaufnehmen.

### Beispiel 1 (Herstellung eines Reinigungsmittels für KTL-Ultrafiltrationsmembranen, Vergleich):

Durch Vermischen folgender Bestandteile wird ein Reinigungsmittel für KTL-Ultrafiltrationsmembranen hergestellt:
86 Gewichtsteile deionisiertes Wasser,
4 Gewichtsteile reine Essigsäure,
10 Gewichtsteile Butylglykol.

Die erhaltene Mischung wird auf 50°C erwärmt.

### Beispiel 2 (Herstellung eines Reinigungsmittels für KTL-Ultrafiltrationsmembranen, erfindungsgemäß):

Eine 1 Gew.-% Phenoxypropanol als Lösemittel enthaltende, mit Essigsäure entsprechend einem Gehalt von 30 Milliäquivalenten Säure pro 100 g Festkörper neutralisierte 35 gew.-%ige KTL-Dispersion mit einem Amingehalt von 60 Milliäquivalenten pro 100 g Festkörper (Festkörper gebildet aus Aminoepoxidharzbindemittel und blockiertem Polyisocyanatvernetzer) wird mit 25 gew.-%iger Essigsäure und deionisiertem Wasser vermischt und dabei auf einen Festkörpergehalt von 25 Gew.-% und einen Neutralisationsgrad von 240 % eingestellt und 3 Stunden bei 50°C gerührt.

### Beispiel 3 (Reinigung eines KTL-Ultrafiltrationsmoduls ohne Imprägnierung, Vergleich):

Ein eine Ultrafiltrationsmembranfläche von 16 Quadratmetern aufweisendes KTL-Ultrafiltrationsmodul (Spiralwickelmodul) wird nach einem infolge fortwährenden KTL-Ultrafiltrationsbetriebs eingetretenen Leistungsabfall von einer anfänglichen Fluxrate von 460 Liter Ultrafiltrat pro Stunde auf 300 Liter Ultrafiltrat pro Stunde gereinigt. Dazu wird zunächst das im zu reinigenden Ultrafiltrationsmodul befindliche KTL-Badmaterial mit Ultrafiltrat herausgespült. Anschließend wird das Ultrafiltrationsmodul 14 Stunden lang mit dem Reinigungsmittel aus Beispiel 1 bei 50 °C, einem Eingangsdruck am Ultrafiltrationsmodul von 3 bar und einem Durchsatz von 12 Kubikmeter pro Stunde im Kreislauf gespült. Danach wird das im Ultrafiltrationsmodul befindliche Reinigungsmittel mit deionisiertem Wasser herausgespült. Anschließend wird mit KTL-Ultrafiltrat gespült, danach die Verbindung des Ultrafiltrationsmoduls mit dem KTL-Badinhalt wiederhergestellt und der normale Ultrafiltrationsbetrieb wiederaufgenommen. Die anfängliche Fluxrate beträgt 460 Liter Ultrafiltrat pro Stunde.

### Beispiel 4 (Reinigung eines KTL-Ultrafiltrationsmoduls mit Imprägnierung, Vergleich):

Beispiel 3 wird wiederholt mit dem Unterschied, daß nach Herausspülen des im Ultrafiltrationsmodul befindlichen Reinigungsmittels mit deionisiertem Wasser eine Imprägnierung des Ultrafiltrationsmoduls vorgenommen wird, indem mit einer 0,5%igen wäßrigen Lösung von Kochkleen™ P3 (Firma Koch, Düsseldorf) gespült wird. Nach anschließendem Spülen mit KTL-Ultrafiltrat wird die Verbindung des Ultrafiltrationsmoduls mit dem KTL-Badinhalt wiederhergestellt und der normale Ultrafiltrationsbetrieb wiederaufgenommen. Die anfängliche Fluxrate beträgt 460 Liter Ultrafiltrat pro Stunde.

### Beispiel 5 (Reinigung eines KTL-Ultrafiltrationsmoduls, erfindungsgemäß):

Beispiel 3 wird wiederholt mit dem Unterschied, daß anstelle des Reinigungsmittels aus Beispiel 1 das Reinigungsmittel aus Beispiel 2 verwendet wird. Das Ausspülen des Reinigungsmittels nach der Reinigung sowie eine besondere Imprägnierung werden nicht vorgenommen. Vielmehr wird die Verbindung des Ultrafiltrationsmoduls mit dem KTL-Badinhalt wiederhergestellt und der normale Ultrafiltrationsbetrieb wiederaufgenommen. Die anfängliche Fluxrate beträgt 460 Liter Ultrafiltrat pro Stunde.

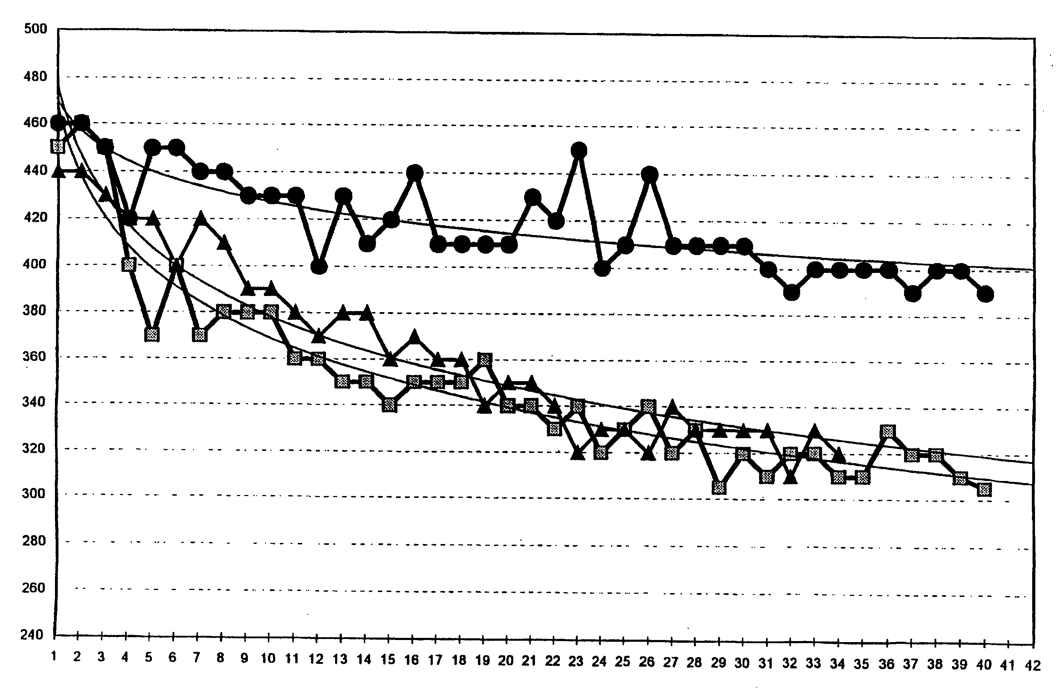

Figur 1 zeigt Kurven, die die zeitliche Abnahme der Ultrafiltrationsleistung (Fluxrate in Litern Ultrafiltrat pro Stunde aufgetragen gegen die Zeitdauer des Ultrafiltrationsbetriebs in Tagen) des gemäß Beispiel 3, 4 bzw. 5 (erfindungsgemäß) gereinigten KTL-Ultrafiltrationsmoduls während des anschließend an die Reinigung wiederaufgenommenen kontinuierlichen KTL-Ultrafiltrationsbetriebs wiedergeben.
Beispiel 3: Kurve mit Viereck-Symbolen,
Beispiel 4: Kurve mit Dreieck-Symbolen,
Beispiel 5: Kurve mit Kreis-Symbolen.

Die Kurven für das gemäß Beispiel 3 und 4 gereinigte Ultrafiltrationsmodul weisen einen nur unwesentlich von einander abweichenden Verlauf auf.

Ausgehend von einem vergleichbaren Anfangsniveau verläuft der zeitliche Abfall der Ultrafiltrationsleistung im Fall des gemäß Beispiel 5 gereinigten KTL-Ultrafiltrationsmoduls wesentlich flacher.

## Patentansprüche

1. Wäßriges Reinigungsmittel für Ultrafiltrationsmembranen in Ultrafiltrationsanlagen von Elektrotauchlackieranlagen, **dadurch gekennzeichnet, daß** es Elektrotauchlack(ETL)-Bindemittel enthält, das mit Neutralisationsmittel entsprechend einem Neutralisationsgrad des ETL-Bindemittels von über 100 bis 1000 % überneutralisiert ist

2. Reinigungsmittel nach Anspruch 1, **dadurch gekennzeichnet, daß** das ETL-Bindemittel selbstvernetzend ist oder in Form von Bindemittel plus Vernetzer vorliegt.

3. Reinigungsmittel nach Anspruch 1 oder 2, **dadurch gekennzeichnet, daß** es ETL-Bindemittel entsprechend einem Festkörpergehalt von 5 bis 35 Gew.-% enthält.

4. Reinigungsmittel nach einem der vorhergehenden Ansprüche, **dadurch gekennzeichnet, daß** das ETL-Bindemittel ein anodisch abscheidbares Bindemittel und das Neutralisationsmittel eine Base ist.

5. Reinigungsmittel nach einem der Ansprüche 1 bis 3, **dadurch gekennzeichnet, daß** das ETL-Bindemittel ein kathodisch abscheidbares Bindemittel und das Neutralisationsmittel eine Säure ist

6. Verfahren zur Reinigung von Ultrafiltrationsmembranen in Ultrafiltrationsanlagen von Elektrotauchlackieranlagen durch Spülen mit einem wäßrigen Reinigungsmittel, **dadurch gekennzeichnet, daß** ein Reinigungsmittel gemäß einem der Ansprüche 1 bis 5 verwendet wird

7. Verfahren nach Anspruch 6, **dadurch gekennzeichnet, daß** das Reinigungsmittel nach erfolgter Reinigung dem Elektrotauchbad der Elektrotauchlackieranlage, deren Ultrafiltrationssystem mit dem Reinigungsmittel gereinigt worden ist, zugesetzt wird, wobei im Reinigungsmittel und im Elektrotauchbad jeweils das gleiche Neutralisationsmittel eingesetzt wird.

8. Verfahren nach Anspruch 6, **dadurch gekennzeichnet, daß** das Reinigungsmittel nach erfolgter Reinigung dem Elektrotauchbad der Elektrotauchlackieranlage, deren Ultrafiltrationssystem mit dem Reinigungsmittel gereinigt worden ist, zugesetzt wird, wobei im Reinigungsmittel und im Elektrotauchbad jeweils das gleiche ETL-Bindemittel eingesetzt wird.

9. Verfahren nach Anspruch 6, **dadurch gekennzeichnet, daß** das Reinigungsmittel nach erfolgter Reinigung dem Elektrotauchbad der Elektrotauchlackieranlage, deren Ultrafiltrationssystem mit dem Reinigungsmittel gereinigt worden ist, zugesetzt wird, wobei im Reinigungsmittel und im Elektrotauchbad jeweils das gleiche Neutralisationsmittel und das gleiche ETL-Bindemittel eingesetzt wird.

10. Verfahren nach Anspruch 6, 7, 8 oder 9, **dadurch gekennzeichnet, daß** das Reinigungsmittel im Kreislauf durch die Ultrafiltrationsanlage geführt wird.

## Claims

1. An aqueous cleaning agent for ultrafiltration membranes in ultrafiltration installations-of electro-dipcoating installations, **characterised in that** it contains electro-dipcoating (EDC) binder which is overneutralised with neutralising agent to a degree of neutralisation of the EDC binder of above 100 to 1000%.

2. A cleaning agent according to claim 1, **characterised in that** the EDC binder is self crosslinking or is present in the form of binder + crosslinking agent.

3. A cleaning agent according to claim 1 or 2, **characterised in that** it contains EDC binder corresponding to a solids content of 5 to 35 wt.%.

4. A cleaning agent according to one of the preceding claims, **characterised in that** the EDC binder is an anodically depositable binder and the neutralising agent is a base.

5. A cleaning agent according to one of claims 1 to 3, **characterised in that** the EDC binder is an cathodically depositable binder and the neutralising agent is an acid.

6. A process for cleaning ultrafiltration membranes in ultrafiltration installations of electro-dipcoating installations by rinsing with an aqueous cleaning agent, **characterised in that** a cleaning agent according to one of claims 1 to 5 is used.

7. A process according to claim 6, **characterised in that**, once cleaning has been performed, the cleaning agent is added to the electro-dipcoating bath of the electro-dipcoating installation, the ultrafiltration system of which has been cleaned with the cleaning agent, wherein the same neutralising agent is used in both the cleaning agent and the electro-dipcoating bath.

8. A process according to claim 6, **characterised in that**, once cleaning has been performed, the cleaning agent is added to the electro-dipcoating bath of the electro-dipcoating installation, the ultrafiltration system of which has been cleaned with the cleaning agent, wherein the same EDC binder is used in both the cleaning agent and the electro-dipcoating bath.

9. A process according to claim 6, **characterised in that**, once cleaning has been performed, the cleaning agent is added to the electro-dipcoating bath of the electro-dipcoating installation, the ultrafiltration system of which has been cleaned with the cleaning agent, wherein the same neutralising agent and the same EDC binder is used in both the cleaning agent and the electro-dipcoating bath.

10. A process according to claim 6, 7, 8 or 9, **characterised in that** the cleaning agent is circulated through the ultrafiltration installation.

## Revendications

1. Produit de nettoyage aqueux pour des membranes d'ultrafiltration dans des installations d'ultrafiltration d'installations de peinture électrophorétique par immersion, **caractérisé en ce qu'**il contient du liant pour peinture électrophorétique par immersion, lequel est surneutralisé avec un neutralisant conformément à un degré de neutralisation du liant pour peinture électrophorétique par immersion allant de 100 % à 1000 %.

2. Produit de nettoyage selon la revendication 1, **caractérisé en ce que** le liant pour peinture électrophorétique par immersion est autoréticulant ou se présente sous la forme de liant plus réticulant.

3. Produit de nettoyage selon la revendication 1 ou 2, **caractérisé en ce qu'**il contient du liant pour peinture électrophorétique par immersion conformément à une teneur en solide allant de 5 % à 35 % en poids.

4. Produit de nettoyage selon l'une quelconque des revendications précédentes, **caractérisé en ce que** le liant pour peinture électrophorétique par immersion est un liant pouvant être précipité à l'anode et le neutralisant une base.

5. Produit de nettoyage selon l'une quelconque des revendications 1 à 3, **caractérisé en ce que** le liant pour peinture électrophorétique par immersion est un liant pouvant être précipité à la cathode et le neutralisant un acide.

6. Procédé pour le nettoyage de membranes d'ultrafiltration dans des installations d'ultrafiltration d'installations de peintures électrophorétique par immersion par lavage avec un produit de nettoyage aqueux, **caractérisé en ce qu'**un produit de nettoyage selon l'une quelconque des revendications 1 à 5 est utilisé.

7. Procédé selon la revendication 6, **caractérisé en ce que** le produit de nettoyage est ajouté, après le nettoyage effectué, au bain électrophorétique par immersion de l'installation de peinture électrophorétique par immersion, dont le système d'ultrafiltration a été nettoyé avec le produit de nettoyage respectivement, le même neutralisant étant utilisé dans le produit de nettoyage et dans le bain électrophorétique par immersion.

8. Procédé selon la revendication 6, **caractérisé en ce que** le produit de nettoyage est ajouté, après le nettoyage effectué, au bain électrophorétique par immersion de l'installation de peinture électrophorétique par immersion, dont le système d'ultrafiltration a été nettoyé avec le produit de nettoyage, respectivement le même. liant pour peinture électrophorétique par immersion étant utilisé dans le produit de nettoyage et dans le bain électrophorétique par immersion.

9. Procédé selon la revendication 6, **caractérisé en ce que** le produit de nettoyage est ajouté, après le nettoyage effectué, au bain électrophorétique par immersion de l'installation de peinture électrophorétique par immersion, dont le système d'ultrafiltration a été nettoyé avec le produit de nettoyage, respectivement le même neutralisant et le même liant pour peinture électrophorétique par immersion étant utilisés dans le produit de nettoyage et dans le bain électrophorétique par immersion.

10. Procédé selon la revendication 6, 7, 8, ou 9, **caractérisé en ce que** le produit de nettoyage est guidé dans le circuit à travers l'installation d'ultrafiltration.
